# EUROPÄISCHE PATENTANMELDUNG

(11) **EP 1 231 307 A1**
(43) Veröffentlichungstag der Anmeldung: **14.08.2002**
(21) Anmeldenummer: 02001939.4
(22) Anmeldetag: 01.02.2002
(51) Int. Cl.: D02J 13/00, D02J 1/22, F16C 39/06

(54) **Galette zum Führen zumindest eines Fadens**

(30) Priorität: 01.02.2001 DE 10104423
(71) Anmelder: Neumag GmbH & Co. KG, 24536 Neumünster (DE)
(72) Erfinder: Kudrus, Heiner, 25355 Barmstedt (DE); von Zwehl, Dietmar, 37434 Bodensee (DE)
(74) Vertreter: Kahlhöfer, Hermann, Dipl.-Phys.

(57) **Zusammenfassung**

Die Erfindung betrifft eine Galette zum Führen von zumindest einem Faden, der am Umfang eines hohlzylindrischen Galettenmantels geführt wird. Der Galettenmantel ist hierzu an einem auskragenden Träger drehbar gelagert, wobei zumindest eines der Lager ein radial wirkendes Magnetlager ist, welches mehrere in Umfangsrichtung verteilte Lagerpolwicklungen am Träger aufweist. Erfindungsgemäß sind die Lagerpolwicklungen in mehreren benachbarten Lagerebenen am Träger verteilt angeordnet, um somit eine schwingungsarme Führung des Galettenmantels zu ermöglichen.

## Beschreibung

Die Erfindung betrifft eine Galette zum Führen zumindest eines Fadens gemäß dem Oberbegriff des Anspruchs 1.

Eine gattungsgemäße Galette ist aus der EP 0 770 719 B1 bekannt.

Die bekannte Galette weist einen mit einem Motor verbundenen Galettenmantel auf, welcher an einem Träger gelagert ist. Zur Lagerung des Galettenmantels sind zwei im Abstand zueinander angeordnete Magnetlager vorgesehen, wobei jedes der Magnetlager mehrere Lagerpolwicklungen aufweist. Die Lagerpolwicklungen eines Magnetlagers sind dabei in einer Lagerebene an einem Träger angeordnet, d.h. die radialen Kraftrichtungen der Lagerpolwicklungen liegen in einer senkrecht zur Drehachse der Galette verlaufenden Lagerebene. Die Lagerpolwicklungen sind dem Innenumfang des Galettenmantels oder dem Außenumfang einer den Galettenmantel tragenden Antriebswelle aus zwei orthogonalen Richtungen zugewandt.

Die Anordnung der Magnetlager soll ermöglichen, daß die Galette zur Fadenbehandlung bei hohen Geschwindigkeiten, nämlich bei Geschwindigkeiten bis zu 8.000 m/min eingesetzt werden. Problematisch ist, daß die in zwei Lagerebenen gelagerten, mit hoher Geschwindigkeit drehenden Galetten eine verhältnismäßig große Steifigkeit aufweisen müssen, um Verformungen der Galette zwischen den Lagerebenen und außerhalb der Lagerebenen zu vermeiden. Zum Erhalt einer ausreichenden Steifigkeit sind bestimmte Formgebungen, bestimmte Materialien und bestimmte Materialstärken notwendig. Dies führt zu einer großen Masse der Galette und entsprechend großen, d.h. räumlich ausgedehnten Lagern, wodurch Resonanzschwingungen bei niedrigen Eigenfrequenzen auftreten können. Resonanzschwingungen bei niedrigen Eigenfrequenzen können wiederum zu Verformungen und im Extremfall zur Zerstörung der Galette führen. Die Notwendigkeit einer gewissen Steifigkeit mit der Gefahr von Resonanzschwingungen steht dem Betrieb der Galetten bei hohen Geschwindigkeiten entgegen. Ein weiterer Nachteil der bekannten Galette liegt darin, daß die Magnetlager mit ihren Lagerpolwicklungen nur bei einem entsprechend großen Außendurchmesser des Galettenmantels einsetzbar sind, zumal die durch die Fadenführung vorgegebene Belastung der Galette eine Mindestpolgröße der Lagerpolwicklungen erfordert.

Es ist somit Aufgabe der Erfindung, eine Galette der eingangs genannten Art derart weiterzubilden, daß einerseits die Gefahr von Verformungen durch Resonanzschwingungen verringert wird und andererseits hohe Lagerbelastungen selbst bei Galettenmänteln mit kleinem Durchmesser sicher aufnehmbar sind.

Die Aufgabe wird durch eine Galette mit den Merkmalen nach Anspruch 1 gelöst.

Vorteilhafte Weiterbildungen der Erfindung sind in den Unteransprüchen definiert.

Die Erfindung zeichnet sich dadurch aus, daß sich die radiale Abstützung des Galettenmantels über einen größeren, sich in Längsrichtung des Galettenmantels erstreckenden Lagerbereich erstreckt. Damit wird selbst bei dünnwandigen Galettenmänteln eine Steifigkeit erzeugt, die in dem Betrieb der Galette bei hohen Geschwindigkeiten ohne Schwingungsprobleme ermöglicht. Hierzu sind die Lagerpolwicklungen des Magnetlagers in mehreren benachbarten Lagerebenen am Träger verteilt angeordnet. Durch die erfindungsgemäße Anordnung der Lagerpolwicklungen lassen sich in dem innerhalb des Galettenmantels zur Verfügung stehenden Einbauraum größtmögliche Lagerpolwicklungen anordnen, so daß insbesondere Magnetlager mit hoher Tragkraft realisierbar sind. Als Galette wird hierbei jede zur Fadenführung in den Textilmaschinen oder Spinnanlagen eingesetzte rotierende Walze verstanden. So erstreckt sich die Erfindung sowohl auf Galetten, bei welchen der Galettenmantel durch einen Antrieb, beispielsweise einen Elektromotor, angetrieben wird oder bei welchen der Galettenmantel frei drehbar an dem Träger gelagert ist.

Die Verteilung der Lagerpolwicklungen über den Träger ermöglicht eine gleichmäßige Verteilung der Positionen der Lagerpolwicklungen auf einer Mantelfläche eines gedachten, um die Drehachse der Galette angeordneten und sich durch die Lagerpole erstreckenden Zylinders. Bei einer Galette des Standes der Technik sind die Lagerpole des Magnetlagers in einer Lagerebene angeordnet. Bereits eine Aufteilung der Lagerpolwicklungen auf eine zusätzliche Lagerebene führt, z.B. bei Galetten, deren axiale Ausdehnung größer ist als ihr Durchmesser, zu einer wesentlichen gleichmäßigen Verteilung der Position der Lagerpolwicklungen auf dieser gedachten Mantelfläche.

Eine Anordnung der Lagerpolwicklungen auf mehr als drei Lagerebenen kann, insbesondere bei Galetten mit großer axialer Ausdehnung, eine weitere Vergleichmäßigung der Positionen der Lagerpolwicklungen auf der gedachten Mantelfläche ermöglichen.

Die erfindungsgemäße Anordnung der Lagerpolwicklungen über den Träger führt zu einer Vergleichmäßigung der Verteilung der Positionen, an denen Kraft zur radialen Lagerung des Galettenmantels eingeleitet wird. Dadurch wird die Tendenz der Galette, sich bei hohen Geschwindigkeiten zu verformen, z.B. bei Resonanzschwingungen durchzubiegen, reduziert. Ein geringerer Abstand der Lagerpolwicklungen voneinander entspricht einer geringeren freien, zu überbrückenden Strecke des Galettenmantels. Neben der dadurch geringeren Verformbarkeit wird auch die Anforderung an die Steifigkeit verringert. Dies kann eine geringere Masse und damit höhere Eigenfrequenzen ermöglichen. Eine geringere Tendenz zu Verformungen und eine geringere Masse ermöglicht den Betrieb der Galette bei höheren Geschwindigkeiten.

Gemäß einer vorteilhaften Weiterbildung der Erfindung nach Anspruch 2 können zumindest einige der Lagerpolwicklungen von Lagerebene zu Lagerebene winkelversetzt angeordnet sein. Bei einer winkelversetzten Anordnung zweier Lagerpolwicklungen ist die Winkelposition einer zweiten Lagerpolwicklung auf einer zweiten Lagerebene von der einer ersten Lagerpolwicklung auf einer ersten Lagerebene unterschieden. Die Winkelposition einer Lagerpolwicklung ist die Position der Lagerpolwicklung am Umfang des Trägers bzw. am Umfang eines gedachten Zylinders bzgl. einer Referenzposition angedrückt als Winkel zwischen dem Radialstrahl der Position und dem Radialstrahl der Referenzposition. Wählt man die Position senkrecht oberhalb der Drehachse als Referenzposition, so sind die Winkelpositionen der Position senkrecht unterhalb der Drehachse 180° und die der seitlichen Position auf Höhe der Drehachse 90° und 270°.

Bei einer winkelversetzten Anordnung der Lagerpolwicklungen variieren die Richtungen, aus denen Kraft auf den Galettenmantel ausgeübt wird. Dies ermöglicht eine radiale Lagerung des Galettenmantels bei einer Anordnung von nur ein oder zwei Lagerpolwicklungen in einer Lagerebene und ggfls. bei einer Vielzahl von Lagerebenen. Dabei ist es notwendig, daß die Lagerpolwicklungen verschiedener Lagerebenen zusammenwirken. Durch eine winkelversetzte Anordnung der Lagerpolwicklungen von Lagerebene zu Lagerebene kann die Verteilung der Lagerpolwicklungen über den Stator weiter vergleichmäßigt werden.

Eine spiralförmige Anordnung zumindest einiger Lagerpolwicklungen von Lagerebene zu Lagerebene gemäß Anspruch 3 vergleichmäßigt die Verteilung der Lagerpolwicklungen auf den Träger weiter. Vorteilhaft ist, wenn der Winkelversatz der Lagerpolwicklungen von Lagerebene zu Lagerebene zwischen 90° und 180°, z.B. bei 120°, liegt und die durch die Lagerpolwicklungen gebildete Spirale mindestens zwei Umdrehungen aufweist.

Eine Anordnung der Lagerpolwicklungen in einer Lagerebene gemäß Anspruch 4 verstärkt den flächigen Charakter der radialen Lagerung des Galettenmantels. Sie kann eine weitere Vergleichmäßigung und Verteilung der Lagerpolwicklungen auf dem Träger ermöglichen.

Die Anordnung von je zwei gegenüberliegenden Lagerpolwicklungen in einer Lagerebene gemäß Anspruch 5, kann, insbesondere für Galetten mit einem großen Durchmesser, eine gleichmäßige Verteilung der Lagerpolwicklungen über dem Träger ermöglichen. Diese Anordnung ist insbesondere geeignet, um höhere flächenbezogene Lagerkräfte zu realisieren.

Es besteht jedoch auch die Möglichkeit zur Erhöhung der Lagerkraft die Lagerpolwicklungen benachbarter Lagerebenen in Umfangsrichtung des Trägers überlappend zueinander anzuordnen.

Um das Zusammenwirken aller Lagerpolwicklungen des Magnetlagers sicherzustellen, ist gemäß einer vorteilhaften Weiterbildung der Erfindung nach Anspruch 7 jedem der Lagerpolwicklungen jeweils ein Sensor zur Überwachung eines Lagerspalts zugeordnet. Die Sensoren und die Lagerpolwicklungen sind mit einer Steuereinrichtung verbunden, so daß jede signalisierte Lagerspaltabweichung sofort ausregelbar ist. Dabei besteht die Möglichkeit, jede Lagerpolwicklung jeweils einzeln durch die Steuereinrichtung zu steuern oder jeweils zwei sich in einer oder mehreren Lagerebenen gegenüberliegenden Lagerpolwicklungen als ein Paar durch die Steuereinrichtung zu steuern.

Bei langen Galetten wird der Galettenmantel bevorzugt nach der Weiterbildung gemäß Anspruch 10 gelagert. Dabei sind zwei in Abstand zueinander angeordnete radial wirkende Magnetlager vorgesehen. Zur Aufnahme der Axialkräfte ist der Galettenmantel zusätzlich durch ein Axiallager gelagert. Um eine größtmögliche Abstützung des Galettenmantels durch die Magnetlager zu erreichen, sind zumindest die Lagerpolwicklungen der Magnetlager in drei Lagerebenen verteilt angeordnet. Hierbei können sowohl Lagerpolwicklungen des einen Magnetlagers als auch Lagerpolwicklungen des anderen Magnetlagers in einer gemeinsamen mittleren Lagerebene angeordnet sein.

Das Axiallager ist bevorzugt als ein axial wirkenden Magnetlager ausgebildet, um eine berührungsfreie Führung zu erhalten, so daß höhere Geschwindigkeiten der Galette ermöglicht werden.

Die zusätzlich zur Magnetischen Lagerung notwendigen Fanglager gemäß Anspruch 12 als berührungsfreie Radiallager auszubilden, ermöglicht ebenfalls höhere Geschwindigkeiten der Galette.

Zur Lagerung des Galettenmantels ist die erfindungsgemäße Galette bevorzugt gemäß der Weiterbildung nach Anspruch 13 ausgeführt. Hierbei ist der Träger zur Aufnahme der Lagerpolwicklungen derart ausgebildet, daß sich der Lagerspalt zwischen den Polenden und dem Galettenmantel ausbildet. Hierbei wirken die magnetischen Lagerkräfte unmittelbar auf den Galettenmantel ein.

Es besteht jedoch auch die Möglichkeit, den Träger zur Aufnahme der Lagerpolwicklungen derart auszuführen, daß sich der Lagerspalt zwischen den Polenden und einer den Träger durchdringenden Welle ausbildet, wobei die Welle an einem Ende fest mit dem Galettenmantel verbunden ist und an dem gegenüberliegenden Ende an einem Antrieb gekoppelt ist. Eine derartige Ausbildung der Erfindung besitzt den Vorteil, daß eine zusätzliche Lagerung in der Antriebseinheit eingespart werden könnte und zum anderen der zwischen dem Galettenmantel und dem Träger gebildete Ringraum zur Aufnahme einer Heizeinrichtung zur Verfügung steht. Durch eine am Umfang des Trägers angeordnete Heizeinrichtung läßt sich der Galettenmantel erwärmen, um eine thermische Behandlung der Fäden durchführen zu können.

Einige Ausführungsbeispiele der erfindungsgemäßen Galette sind im folgenden unter Hinweis auf die beigefügten Zeichnungen näher beschrieben.

Es stellen dar:
- Fig. 1 und 2: schematisch ein erstes Ausführungsbeispiel der erfindungsgemäßen Galette;
- Fig. 3 und 4: schematisch ein weiteres Ausführungsbeispiel der erfindungsgemäßen Galette;
- Fig. 5 und 6: schematisch ein weiteres Ausführungsbeispiel der erfindungsgemäßen Galette;
- Fig. 7: schematisch ein weiteres Ausführungsbeispiel der erfindungsgemäßen Galette.

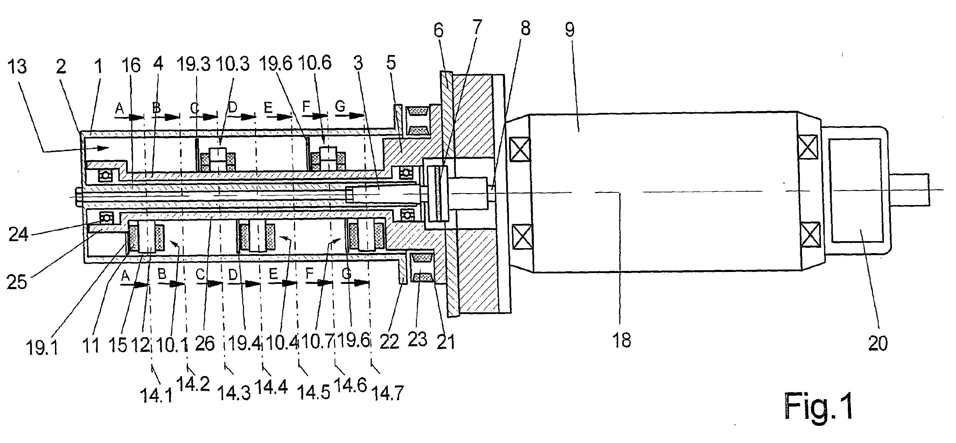

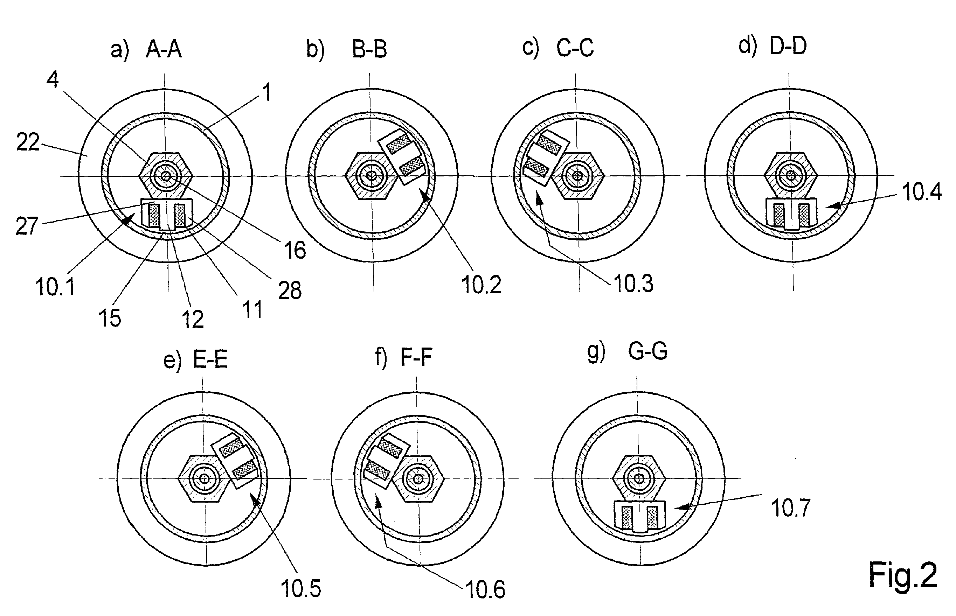

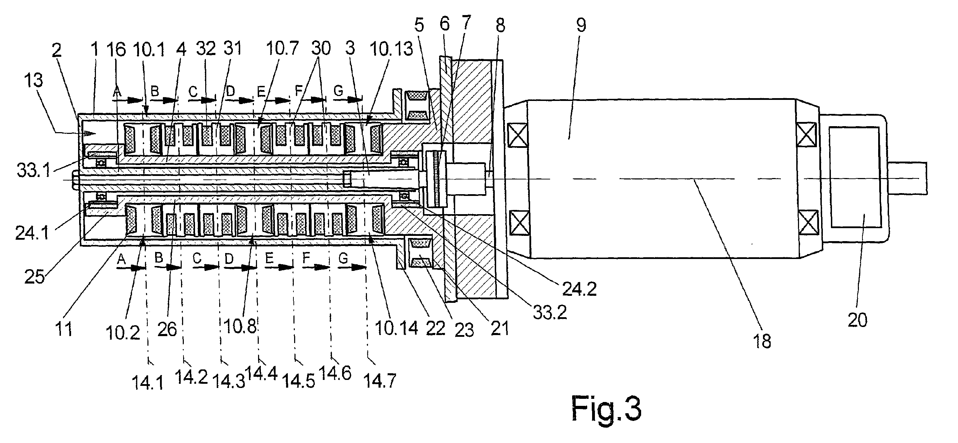

In den Figuren 1 und 2 ist ein erstes Ausführungsbeispiel der erfindungsgemäßen Galette dargestellt. Die Fig. 1 zeigt die für die Erfindung wesentlichen Teile der Galette anhand eines parallel zur und durch die Drehachse verlaufenden Schnitts und Fig. 2a) bis g) anhand der Lagerebenen entsprechenden Schnitten senkrecht zur Drehachse.

Die nachfolgende Beschreibung gilt somit für beiden Figuren, insoweit kein ausdrücklicher Bezug zu einer der Figuren genommen ist. Das Ausführungsbeispiel der erfindungsgemäßen Galette weist einen Galettenmantel 1 auf, der über eine Stirnwand 2 und eine Nabe 16 mit einer im Innern des Galettenmantels 1 verlaufenden Welle 3 drehfest verbunden ist. Die Welle 3 ist mit ihrem gegenüberliegenden Ende über eine Kupplung 7 an eine Motorwelle 8 eines Motors 9 angeschlossen. Der als Elektromotor ausgebildete Motor 9 ist in der Fig. 1 nicht in Einzelheiten dargestellt.

Der Galettenmantel 1 ist durch ein radial wirkendes Magnetlager 13 an einem auskragenden Träger 4 gelagert. Der Träger 4 ist hohlzylindrisch ausgebildet und erstreckt sich innerhalb des Galettenmantels 1 bis kurz vor die Stirnwand 2. Der Träger 4 wird hierbei von der Nabe 16 und der Welle 3 durchdrungen. Auf der zur Stirnwand 2 gegenüberliegenden Seite ist der Träger 4 über einen Bund 5 an einem Gestell 6 befestigt. Das Magnetlager 13 weist mehrere Lagerpolwicklungen 10 auf, die an dem Träger 4 in mehreren Lagerebenen 14 verteilt angeordnet sind. Jede der Lagerpolwicklungen 10 besteht aus einer Erregerwicklung 11 und einem Polelement 12. Insgesamt sind an dem Außenumfang des Trägers 4 sieben Lagerpolwicklungen 10.1 bis 10.7 in sieben nebeneinander liegenden Lagerebenen 14.1 bis 14.7 angeordnet. Dabei sind die Lagerpolwicklungen 10.1 bis 10.7 von Lagerebene zu Lagerebene winkelversetzt am Träger 4 verteilt angeordnet.

In der Fig. 2 ist jeweils ein Querschnitt jeder Lagerebene 14.1 bis 14.7 gezeigt, wobei die Lagerebene 14.1 in Fig. 2a), die Lagerebene 14.2 in Fig. 2b), die Lagerebene 14.3 in Fig. 2c) usw. dargestellt sind. Die Lagerpolwicklungen 10.1 bis 10.7 sind von Lagerebene zu Lagerebene winkelversetzt an dem Träger 4 verteilt angeordnet. Die Winkelpositionen der Lagerpolwicklungen 10.1 bis 10.7 betragen 180°, 60°, 300°, 180°, 60°, 30° und 180°. Der Winkelversatz der Lagerpolwicklungen 10.1 bis 10.7 von Lagerebene zu Lagerebene beträgt somit 120°. Die Lagerpolwicklungen 10.1 bis 10.7 bilden eine Spirale um eine Drehachse 18 mit aufgrund gleichen Winkelversetzen und der gleichen Abstände zwischen den Lagerebenen konstanter Steigung. Zwischen jedem der Lagerpolwicklungen 10.1 und 10.7 und dem Galettenmantel 1 ist jeweils ein Lagerspalt 15 gebildet. Zur Überwachung des Lagerspaltes 15 bzw. zur Ermittlung der radialen Lage des Galettenmantels 1 ist jedem der Lagerpolwicklungen 10.1 bis 10.7 ein Sensor 19 zugeordnet. Die Sensoren 19.1 bis 19.7, wobei in der Fig. 1 nur die Sensoren 19.1, 19.3, 19.4, 19.6 und 19.7 sichtbar sind, sind über die nicht gezeigte Signalleitungen mit einer Steuereinrichtung 20 gekoppelt. Die Steuereinrichtung 20 ist über Steuerleitungen mit den Erregerwicklungen 11 der Lagerpolwicklungen 10.1 bis 10.7 verbunden.

Der Durchmesser des Bundes 5 des Trägers 4 ist an seinem dem Gestell 6 zugewandten Ende größer als die beiden übereinstimmenden Durchmesser der Stirnwand 2 und des Galettenmantels 1. Der Bund 5 des Trägers 4 weist zum Galettenmantel 1 hin eine Stufe 21 mit einer ringförmigen Fläche auf, wobei der Durchmesser des Bundes 5 nach der Stufe 21 etwas kleiner ist als der Innendurchmesser des Galettenmantels 1. Der Galettenmantel 1 erstreckt sich mit seinem freien, der Stirnwand 2 gegenüberliegenden Ende bis vor die Stufe 21 und weist an diesem Ende einen schmalen Bund 22 auf. Der Durchmesser des Bundes 22 entspricht dem Durchmesser des verglichen mit dem Bund 22 breiteren Bundes 5 des Trägers 4, an dessen dem Gestell 6 zugewandten Ende. An dem Bund 22 des Galettenmantels 1 befindet sich ein magnetisches Axiallager 23. Dabei sind mit Erregerwicklungen versehene Lagerpolelemente des Axiallagers 23 auf der Stufe 21 des Bundes 5 des Tragrohres 4 angeordnet und weisen zu dem Bund 22 des Galettenmantels 1.

Außerdem ist mindestens ein als Fanglager dienendes, mechanisches, berührungsfreies Radiallager 24 vorgesehen. In diesem Beispiel weisen die Enden des Trägers 4 zur Nabe 16 des Galettenmantels 1 hin ringförmige Einbuchtungen auf, die jeweils eines der auf dem Träger 4 angeordneten Radiallager 24 aufnehmen. Zwischen den Radiallagern 24 und der Nabe 16 befinden sich kleine Spalte. Der Träger 4 erstreckt sich von dem Gestell 6 bis nahe an die Stirnwand 2 des Galettenmantels und weist von dem Gestell ausgehend den Bund 5 mit der Stufe 21, dessen zur Nabe 16 weisende Innenfläche, die eine Einbuchtung für das erste Radiallager 24 bildet, einen Abschnitt 26 für die Lagerpolwicklungen 10.1 bis 10.7 und einen die Einbuchtung für das zweite Radiallager 24 bildenden Abschnitt 25 auf. Der die Lagerpole 10.1 bis 10.7 aufnehmende Abschnitt 26 des Trägers 4 ist als Sechskant ausgebildet, d.h. seine sechs Außenflächen bilden im Querschnitt senkrecht zur Drehachse 18 ein Sechseck. Die Lagerpolwicklungen 10.1 bis 10.7 weisen beispielhaft E-förmige Polelemente 12 auf, die mit je einer Bodenplatte 27 und drei Schenkeln 28 ausgebildet sind. Hierbei ist die Erregerwicklung 10 um den mittleren Schenkel 28 gewickelt. Die Lagerpolwicklungen 10.1 bis 10.7 liegen jeweils mit ihren Bodenplatten 27 auf einer der sechs Außenflächen des Abschnitts 26 des Trägers 4 auf. Die Kraftrichtung z.B. der Lagerpolwicklung 10.1 ist in Richtung des Radialstrahls, der senkrecht zur Außenfläche der Lagerpolwicklung 10.1 verläuft (Fig. 2a)). Die bei Ausbildung des Abschnitts 26 für die Lagerpolwicklungen 10.1 bis 10.7 möglichen Winkelpositionen der Lagerpolwicklungen sind die sechs Winkelpositionen 0°, 60°, 120°, 180°, 240° und 300°.

Bei einer alternativen Ausführungsform mit einer von sechs verschiedenen Winkelpositionen für die Lagerpolwicklungen 10.1 bis 10.7 kann der Träger 4 im Abschnitt 26 als ein vom Sechskant verschiedener Vielkant, z.B. ein Fünfkant oder ein Achtkant, ausgebildet sein.

Bei einer weiteren alternativen Ausführungsform können der Träger 4 und die Lagerpolwicklungen 10.1 bis 10.7 so ausgebildet sein, daß die Lagerpolwicklungen 10.1 bis 10.7 an dem Innenumfang des Trägers 4 angeordnet sind und zur Nabe 16 des Galettenmantels weisen. Hierbei würde sich die Lagerspalten zwischen den Lagerpolwicklungen 10.1 bis 10.7 und der Nabe 16 einstellen.

Ebenfalls alternativ können die Sensoren 19 unabhängig von den Positionen der Lagerpolwicklungen 10.1 bis 10.7 über die Galette verteilt sein.

Im Betrieb wird die aktuelle Lage des Galettenmantels durch die Sensoren 19.1 bis 19.7 gemessen und die Meßwerte der Steuereinrichtung 20 zugeleitet. In der Steuereinrichtung 20 wird aus den Meßwerten die Lage des gesamten Galettenmantels ermittelt und entsprechend der gewünschten Korrektur der Lage die einzelnen Erregerwicklungen 11 der Lagerpolwicklungen 10.1 bis 10.7 angesteuert. Dabei werden in den meisten Fällen mehrere der Lagerpolwicklungen 10.1 bis 10.7 gleichzeitig angesteuert und durch die gemeinsame Kraftausübung der entsprechenden Lagerpole 10.1 bis 10.7 die Lage des Galettenmantels korrigiert. Das Zusammenwirken der Lagerpolwicklungen 10.1 bis 10.7 führt zu einer eher flächigen Lagerung des Galettenmantels 1.

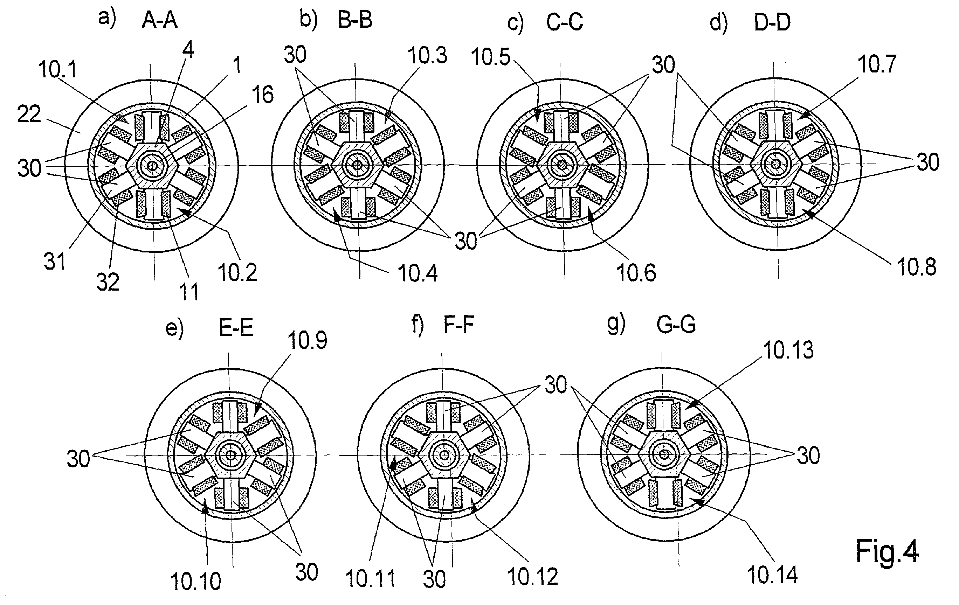

In Fig. 3 und 4 ist ein weiteres Ausführungsbeispiel der erfindungsgemäßen Galette dargestellt. Hierbei zeigt Fig. 3 schematisch einen Längsschnitt der für die Erfindung wesentlichen Teile der Galette und Fig. 4a) bis g) jeweils einen Querschnitt der Lagerebenen der Galette. Die Bauteile gleicher Funktion sind mit identischen Bezugszeichen bezeichnet.

Die nachfolgende Beschreibung gilt für die Figuren 3 und 4, insoweit kein ausdrücklicher Bezug zu einer der Figuren genommen ist. Das Ausführungsbeispiel entspricht dem Ausführungsbeispiel der erfindungsgemäßen Galette nach Fig. 1 im wesentlichen, so daß nachfolgend nur die Unterschiede erläutert werden. Der Galettenmantel 1 ist durch ein Magnetlager 13 an dem auskragenden Träger 4 gelagert. Hierzu weist das Magnetlager 13 insgesamt vierzehn Lagerpolwicklungen 10.1 bis 10.14 auf, die paarweise einander gegenüberliegend in jeweils einer Lagerebene 14 angeordnet sind. Somit sind die Lagerpolwicklungen 10.1 bis 10.14 auf insgesamt sieben Lagerebenen 10.1 bis 10.7 aufgeteilt. Die Winkelpositionen der beiden Lagerpolwicklungen 10.1 und 10.2 bis 10.12 und 12.14 in den Lagerebenen 14.1 bis 14.7 betragen 0° und 180°, 60° und 240°, 120° und 30°, 0° und 180°, 60° und 240°, 120° und 300° und 0° und 180°, d.h. die Lagerpolwicklungen 10.1 bis 10.14 sind von Lagerebene zu Lagerebene winkelversetzt angeordnet. Die Lagerpolwicklungen 10.1 bis 10.14 bilden zwei Spiralen um die Drehachse 18 mit jeweils zwei Umdrehungen mit konstanter Steigung.

Die Lagerpolwicklungen 10.1 bis 10.14 besitzen jeweils zylindrische Polelemente 12, um die die Erregerwicklungen 11 gewickelt sind. Die Polelemente 12 der Lagerpolwicklungen 10.1, 10.2 bis 10.13 bis 10.14 sind paarweise in ihrer Lagerebene 14 auf zwei gegenüberliegenden Außenflächen des ebenfalls als Sechskant ausgebildeten Abschnitts 26 des Trägers 4 angeordnet.

Zwischen den Lagerpolwicklungen 10.1 bis 10.14 sind an dem Träger 4 mehrere Heizpolwicklungen 30 einer Heizeinrichtung angeordnet, welche den Galettenmantel induktiv erwärmt. Hierzu sind die Heizpolwicklungen 30 an den übrigen Außenflächen des Abschnitts 26 in jeder der Lagerebenen angeordnet. Die Heizpolwicklungen 30 bestehen hierbei aus einem Polelement 31 und einer Erregerwicklung 32. Die Erregerwicklungen 32 sind über Steuerleitungen mit einer Heizsteuereinrichtung (hier nicht dargestellt) verbunden. Die gleichmäßige Verteilung der Lagerpolwicklungen 10.1 bis 10.14 an dem Träger 4 ermöglicht auch eine gleichmäßige Verteilung der Heizpolwicklungen 30 an dem Träger und damit, neben der flächigen Lagerung, eine gleichmäßige Beheizung des Galettenmantels 1.

In den Figuren 3 und 4 sind die Sensoren 19 der Übersicht halber weggelassen.

Die jeweils am freien Ende des Trägers 4 und am eingespannten Ende des Trägers 4 vorgesehenen Radiallager 24.1 und 24.2 sind unmittelbar mit dem Umfang der Welle 3 verbunden. Dabei sind jeweils zwischen dem Träger 4 und den Radiallagern 24.1 und 24.2 elastisch wirkende Hülsen 33 angeordnet. Die Hülse 33 könnte hierzu beispielsweise einen innenliegenden Metallring zur Aufnahme des Radiallagers 24 und einen außenliegenden Elastomerring zur Abstützung gegenüber dem Träger 4 aufweisen. Damit ist ein sicheres Anlaufen bzw. ein Notlauf des Galettenmantels unabhängig von der Magnetlagerung möglich.

Eine weitere alternative Ausführung könnte darin liegen, daß die Axialkräfte des Galettenmantels durch vorgespannte Radiallager aufgenommen werden. Dabei könnte das am Bund 5 des Trägers 4 ausgebildete Axiallager entfallen.

Im Betrieb erfolgt das Zusammenwirken der Lagerpolwicklungen 10.1 bis 10.14 z.B. indem bei bestimmten Fehllagen des Galettenmantels bestimmte Lagerpolwicklungen 10.1 bis 10.14 angesteuert werden. Im folgenden werden einige Fehllagen und die zur Korrektur dieser Fehllagen angesteuerten Lagerpolwicklungen aufgeführt:
a) Auslenkung des Galettenmantels 1 an seinem zum Gestell 6 weisenden Ende nach oben:
   Lagerpolwicklungen 10.2, 10.4, 10.6, 10.9, 10.11 und 10.13
b) Verschiebung des Galettenmantels 1 nach oben:
   Lagerpolwicklung 10.1, 10.3, 10.5, 10.7, 10.9, 10.11 und 10.13
c) Auslenkung des Galettenmantels 1 an seinem zum Gestell 6 weisenden Ende zur Aussicht auf die Galette zum Gestell 6 hin linken Seite (Fig. 4a) bis 4g):
   Lagerpole 10.3, 10.6, 10.10 und 10.11
d) Verschiebung des Galettenmantels 1 zur linken Seite:
   Lagerpolwicklungen 10.4, 10.5, 10.10 und 10.11
e) Erste Resonanzschwingung mit Schwingungsbauch nach oben:
   Lagerpolwicklungen 10.3 bis 10.12 werden so angesteuert, daß dem Schwingungsbauch entgegengewirkt wird. Hierbei wird der geometrische Mittelpunkt aus der Mitte heraus verschoben, um eine Rotation um den Massenmittelpunkt zu erreichen.
f) Zweite Resonanzschwingung mit Schwingungsbäuchen nach oben, am vom Gestell 6 wegweisenden Ende der Galette und nach unten zum Gestell 6 hinweisenden Ende der Galette:
   Lagerpolwicklungen 10.3 bis 10.6 arbeiten entgegengesetzt zu den
   Lagerpolwicklungen 10.9 bis 10.12.

Dabei wirkt jede der Lagerpolwicklungen 10.1 bis 10.14 anziehend auf den Galettenmantel 1 ein. Zur Korrektur der Lage des Galettenmantels wird die Kraft einzelner Lagerpolwicklungen, nämlich der in den Fällen a) bis f) benannten Lagerpolwicklungen, verstärkt, indem der den entsprechenden Erregerwicklungen 11 aufgegebene Strom verstärkt wird. Dabei kann die Stromstärke und damit die Kraft auf den Galettenmantel gleich bleiben.

Alternativ könnte die gesamte Stromstrecke für die Lagerpolwicklungen 10.1 bis 10.14 konstant gehalten werden und zur Korrektur der Lage des Galettenmantels 1 nur eine Umverteilung der den einzelnen Lagerpolwicklungen 10.1 bis 10.14 zugeführten Teilstromstärken vorgenommen werden.

Die in den Figuren 1 und 3 dargestellten Ausführungsbeispiele basieren darauf, daß der Galettenmantel durch ein Magnetlager gelagert ist. Es ist jedoch auch möglich, die dargestellten Ausführungsbeispiele derart auszubilden, daß der Galettenmantel 1 durch zwei getrennte Magnetlager gelagert wird. Die beiden Magnetlager würden dann unabhängig voneinander gesteuert.

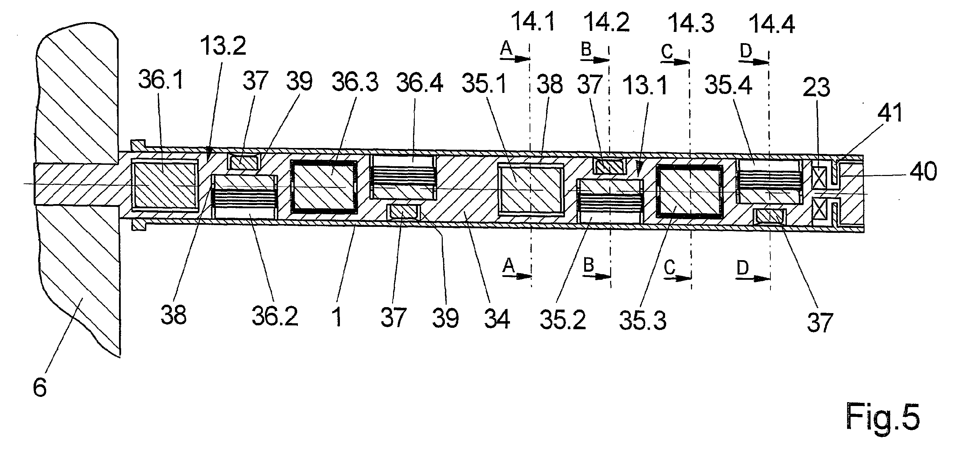

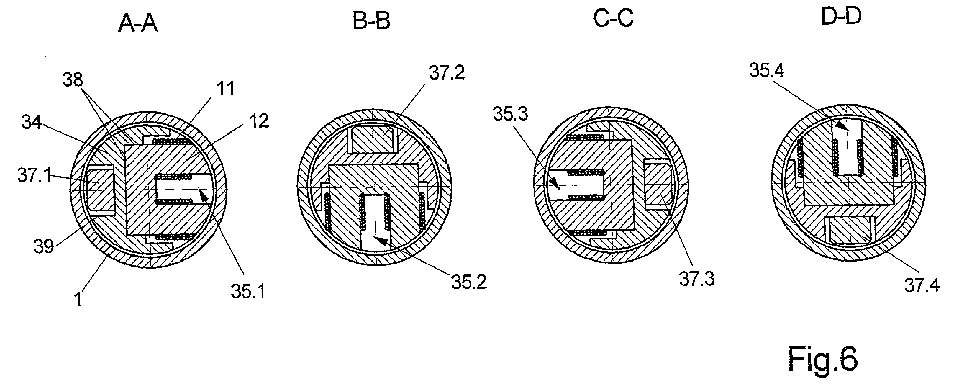

Im nachfolgenden ist ein weiteres Ausführungsbeispiel einer erfindungsgemäßen Galette in den Figuren 5 und 6 dargestellt, bei welcher der Galettenmantel 1 nicht durch einen Motor angetrieben ist. Hierbei ist das Ausführungsbeispiel in Fig. 5 schematisch in einem Längsschnitt und in Fig. 6 in mehreren Querschnitte längs der Lagerebenen dargestellt. Die Bauteile gleicher Funktion sind hierbei ebenfalls mit identischen Bezugszeichen gekennzeichnet. Das Ausführungsbeispiel der erfindungsgemäßen Galette besitzt hierbei einen lang auskragenden Träger 34, der einseitig an einem Gestell 6 befestigt ist. An dem Träger 34 ist der hohlzylindrisch ausgebildete Galettenmantel 1 frei drehbar gelagert. Zur Lagerung des Galettenmantels 1 sind die radial wirkenden Magnetlager 13.1 und 13.2 sowie ein Axiallager 23 vorgesehen. Das Magnetlager 13.1 besitzt vier Lagerpolwicklungen 35.1 bis 35.4, die in Abstand zueinander in jeweils einer Lagerebene 14.1 bis 14.4 angeordnet sind. die Lagerpolwicklungen 35.1 bis 35.4 sind hierbei jeweils um einen Winkel von 90° versetzt am Träger 34 angeordnet. Der Träger 34 besitzt hierzu mehrere Einschnitte 38, in denen die Lagerpolwicklungen 35 fest angeordnet sind. Die Lagerpolwicklungen 35 weisen eine Größe auf, die einen Einschnitt 38 in dem Träger 34 erfordern, der sich über die Mittelachse des Trägers 34 hinaus erstreckt. Auf der zum Einschnitt 38 gegenüberliegenden Seite des Trägers 34 ist ein kleinerer Einschnitt 39 vorgesehen, in welchen jeweils ein Sensor 37 angeordnet ist. Hierbei ist jedem der Lagerpolwicklungen 35.1 bis 35.4 jeweils ein gegenüberliegender Sensor 37.1 bis 37.4 zugeordnet. Die Lagerpolwicklungen 35 werden hierbei beispielhaft durch ein U-förmiges Polelement 12 gebildet, an dessen Schenkel die Erregerwicklungen 11 befestigt sind. Jede der Erregerwicklungen 11 der Lagerpolwicklungen 35.1 bis 35.4 sind gemeinsam mit den Sensoren 37.1 bis 37.4 an einer hier nicht dargestellten Steuereinrichtung angeschlossen. Jede der Lagerpolwicklungen 35 kann dabei unabhängig von den benachbarten Lagerpolwicklungen angesteuert werden.

Das Magnetlager 13.2 im Bereich der Einspannung des Trägers 34 ist ebenfalls mit vier Lagerpolwicklungen 36.1 bis 36.4 ausgeführt. Die Ausbildung und Anordnung der Lagerpolwicklungen 36 ist identisch zu dem Magnetlager 13.1, so daß auf eine weitergehende Beschreibung an dieser Stelle verzichtet wird.

Am freien Ende des Trägers ist eine umlaufende Nut 40 in dem Träger ausgebildet, die zur Aufnahme eines Axiallagers 23 dient. Hierbei wirkt das Axiallager auf einen umlaufenden Steg 41, der fest mit dem Galettenmantel 1 verbunden ist. Das Axiallager 23 ist hierbei als Magnetlager ausgebildet.

Jedes der radial wirkenden Magnetlager 13.1 und 13.2 ist über eine hier nicht dargestellte Steuereinrichtung ansteuerbar. Dabei werden innerhalb des jeweiligen Magnetlagers 13 die Erregerwicklungen 11 der Lagerpolwicklungen 35 bzw. der Lagerpolwicklungen 36 einzeln entsprechend der Sensorsignale derart gesteuert, daß zwischen den Polenden der Lagerpolwicklungen 35 und 36 und dem Galettenmantel 1 ein gleichbleibender Lagerspalt besteht. Dieses Ausführungsbeispiel der erfindungsgemäßen Galette ist insbesondere geeignet, um in Streckwerken als sogenannte Überlaufrolle den von einer angetriebenen Galette herkommenden Faden zu übernehmen, damit dieser in mehreren Umschlingungen zur Verstreckung oder thermischen Behandlung geführt werden kann. Derartige Galetten sind üblicherweise mit einem relativ kleinen Außendurchmesser ausgeführt, wobei die durch die Fadenumschlingung an dem Galettenmantel 1 erzeugten Lagerbelastungen vergleichbar zu den angetriebenen Galetten sind.

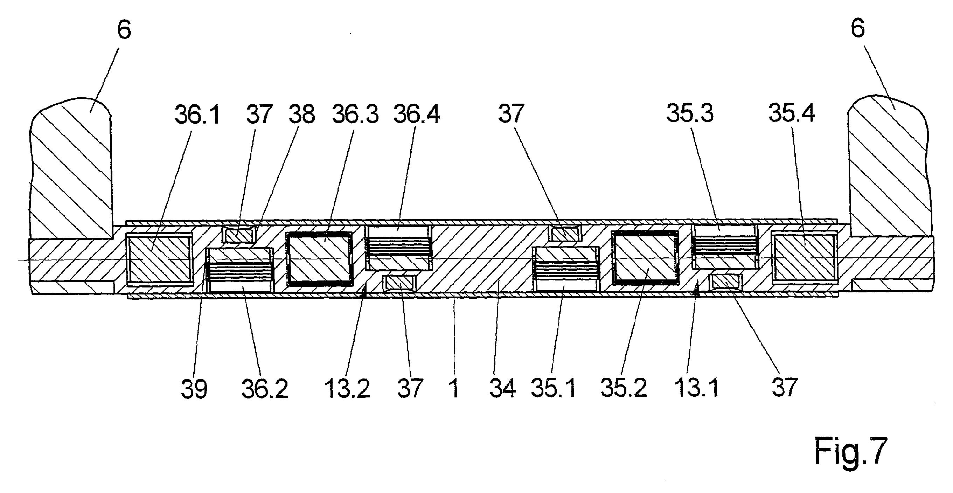

In Fig. 7 ist ein weiteres Ausführungsbeispiel einer nicht angetriebenen Galette dargestellt, die im wesentlichen identisch zu dem Ausführungsbeispiel nach Fig. 5 und 6 ausgebildet ist. Insoweit wird auf die vorhergehende Beschreibung Bezug genommen, und nachfolgend werden nur die Unterschiede erwähnt.

Der zylindrische Träger 34 ist an beiden Enden in einem Gestell 6 fest angeordnet. Am Umfang des Trägers 34 ist der Galettenmantel 1 drehbar gelagert. Hierbei sind an dem Träger 34 die Magnetlager 13.1 und 13.2 angeordnet. Die Magnetlager 13.1 und 13.2 sind identisch zu dem vorhergehenden Ausführungsbeispiel aufgebaut.

Die Magnetlager 13.1 und 13.2 werden zur Lagerung des Galettenmantels 1 derart gesteuert, daß der zwischen den Lagerpolwicklungen 35 und 36 und dem Galettenmantel 1 bestehende Lagerspalt im wesentlichen gleich bleibt.

Eine Axiallagerung des Galettenmantels ist hierbei nicht dargestellt. Die Axialkräfte könnten beispielsweise hierbei auch durch entsprechende Formgebung der Polenden der Lagerpolwicklungen 35 und 36 aufgenommen werden. Es ist jedoch auch möglich, zusätzliche Radiallager oder Axiallager zwischen dem Galettenmantel 1 und dem Träger 4 anzuordnen.

Das in Fig. 7 dargestellte Ausführungsbeispiel der Galette wird bevorzugt als Führungswalze zum Ablegen eines Fadens auf eine Spule verwendet. Hierbei wird der Faden am Umfang des Galettenmantels 1 geführt.

Die erfindungsgemäße Galette zeichnet sich somit einerseits durch eine besonders schwingungsarme Lagerung des Galettenmantels und andererseits durch eine sehr kompakte Bauweise aus. Wesentlich hierbei ist, daß die Lagerpolwicklungen des oder der Magnetlager in mehreren Lagerebenen verteilt angeordnet sind.

### Bezugszeichenliste

- 1: Galettenmantel
- 2: Stirnwand
- 3: Welle
- 4: Träger
- 5: Bund
- 6: Gestell
- 7: Kupplung
- 8: Motorwelle
- 9: Motor
- 10: Lagerpolwicklungen
- 11: Erregerwicklung
- 12: Polelement
- 13: Magnetlager
- 14: Lagerebene
- 15: Lagerspalt
- 16: Nabe
- 18: Drehachse
- 19: Sensor
- 20: Steuereinrichtung
- 21: Stufe
- 22: Bund
- 23: Axiallager
- 24: Radiallager
- 25: Abschnitt
- 26: Abschnitt
- 27: Bodenplatte
- 28: Schenkel
- 29: Heizeinrichtung
- 30: Heizpolwicklung
- 31: Polelement
- 32: Erregerwicklung
- 33: Hülse
- 34: Träger
- 35: Lagerpolwicklung
- 36: Lagerpolwicklung
- 37: Sensor
- 38: Einschnitt
- 39: Einschnitt
- 40: Nut
- 41: Steg

## Patentansprüche

1. Galette zum Führen von zumindest einem Faden mit einem hohlzylinderischen Galettenmantel (1), an dessen Umfang der Faden geführt ist, mit einem auskragenden Träger (4), an welchem der Galettenmantel (1) durch mehrere Lager (13, 23, 24)drehbar gelagert ist, wobei zumindest eines der Lager ein radial wirkendes Magnetlagern (13) ist, welches mehrere in Umfangsrichtung verteilte Lagerpolwicklungen (10) am Träger (4) aufweist, **dadurch gekennzeichnet, dass** die Lagerpolwicklungen (10) in mehreren benachbarten Lagerebenen (14.1, 14.2) am Träger (4) verteilt angeordnet sind.

2. Galette nach Anspruch 1, **dadurch gekennzeichnet, daß** zumindest einige der Lagerpolwicklungen (10.1, 10.2) von Lagerebene (14.1) zu Lagerebene (14.2) winkelversetzt an den Träger (4) verteilt angeordnet sind.

3. Galette nach Anspruch 2, **dadurch gekennzeichnet, daß** die Lagerpolwicklungen (10.1 - 10.7) in Längsrichtung des Trägers (4) eine spiralförmige Anordnung bilden.

4. Galette nach einem der Ansprüche 1 bis 3, **dadurch gekennzeichnet, dass** die Lagerpolwicklungen (10.1 - 10.7) einzeln in den Lagerebenen (14.1 - 14.7) angeordnet sind.

5. Galette nach einem der Ansprüche 1 bis 3, **dadurch gekennzeichnet, dass** die Lagerpolwicklungen (10.1 - 10.14) paarweise einander gegenüberliegend in den Lagerebenen (14.1 - 14.7) angeordnet sind.

6. Galette nach einem der Ansprüche 1 bis 5, **dadurch gekennzeichnet, dass** die Lagerpolwicklungen (10) benachbarter Lagerebenen (14) in Umfangsrichtung des Trägers (4) überlappend zueinander angeordnet sind.

7. Galette nach einem der vorgenannten Ansprüche, **dadurch gekennzeichnet, dass** jeder der Lagerpolwicklungen (10) jeweils einen Sensor (19) zur Überwachung eines Lagerspaltes (15) zugeordnet ist und daß die Sensoren (19) und die Lagerpolwicklungen (10) mit einer Steuereinrichtung (20) verbunden sind.

8. Galette nach Anspruch 7, **dadurch gekennzeichnet, daß** die Lagerpolwicklungen (10) jeweils einzeln durch die Steuereinrichtung (20) steuerbar sind.

9. Galette nach Anspruch 7, **dadurch gekennzeichnet, daß** die Lagerpolwicklungen (10) jeweils paarweise durch die Steuereinrichtung (20) steuerbar sind.

10. Galette nach einem der vorgenannten Ansprüche, **dadurch gekennzeichnet, dass** der Galettenmantel (1) durch zwei radial wirkende Magnetlager (13.1, 13.2) und einem Axiallager (23) gelagert ist, wobei die Lagerpolwicklungen (35, 36) der Magnetlager (13.1, 13.2) in zumindest drei Lagerebenen (14) verteilt angeordnet sind.

11. Galette nach Anspruch 10, **dadurch gekennzeichnet, dass** das Axiallager (23) durch ein axial wirkendes Magnetlager gebildet ist.

12. Galette nach einem der Ansprüche 1 bis 11, **dadurch gekennzeichnet, daß** zumindest ein Fanglager (24) vorgesehen ist, welches als berührungsfreies Radiallager oder als elastisch eingespanntes Radiallager ausgebildet ist.

13. Galette nach einem der Ansprüche 1 bis 12, **dadurch gekennzeichnet, dass** der Träger (4) zur Aufnahme der Lagerpolwicklungen (10) derart ausgebildet ist, daß sich der Lagerspalt (15) zwischen den Polenden und dem Galettenmantel ausbildet.

14. Galette nach einem der Ansprüche 1 bis 12, **dadurch gekennzeichnet, dass** der Träger zur Aufnahme der Lagerpolwicklungen derart ausgebildet ist, daß sich der Lagerspalt zwischen den Polenden und einer den Träger durchdringenden Welle ausbildet, wobei die Welle fest mit dem Galettenmantel verbunden ist.

15. Galette nach einem der Ansprüche 1 bis 14, **dadurch gekennzeichnet, dass** der Galettenmantel durch zumindest eine Heizeinrichtung beheizbar ausgeführt ist.
